# EUROPEAN PATENT SPECIFICATION

(11) **EP 2 312 710 B1**
(45) Date of publication and mention of the grant of the patent: **04.05.2016**
(21) Application number: 09012901.6
(22) Date of filing: 13.10.2009
(51) Int. Cl.: H02B 13/075, H02B 13/035

(54) **Three-phase gasinsulated medium voltage switching device**
Dreiphasige gasisolierte Mittelspannungsschaltanlage
Dispositif de commutation de tension moyenne triphasé isolé du gaz

(43) Date of publication of application: 20.04.2011
(73) Proprietor: ABB Technology AG, 8050 Zürich (CH)
(72) Inventor: Hyrenbach, Maik, Dr.-Ing., 40878 Ratingen (DE); Kasimir, Mai, 40595 Düsseldorf (DE)
(74) Representative: Schmidt, Karl Michael

(56) References cited:
- EP-A1- 0 633 587
- WO-A1-2009/060513
- DE-A1- 4 233 986
- AREVA T&D: 'GHA Gas-Insulated Circuit Breaker Switchgear Unit up to 40.5 kV', [Online] 29 October 2007, pages 1 - 8, XP055026780 Retrieved from the Internet: <URL:http://www.medelec.com.mt/medelec/down loads/GHA.pdf> [retrieved on 2012-05-10]

## Description

The invention relates to a three-phase gasinsulated medium voltage switching device with a disconnecting device between medium voltage levels and voltage transformers with disconnector contacts which are arranged on a rotatable shaft, in that way, that by a partly rotation of the shaft, the disconnector contacts switch connected voltage transformers between medium voltage level and ground level.

To protect voltage transformers (VT) a state-of-the-art solution is to use a disconnecting device, which is opening the electrical connection between the VT and the high voltage circuit of the panel. As the bushings or the contacts for the VT's in three-phase insulated GIS are very often located side-by-side, the axis of the shaft operating the contacts is parallel to the panel front. To allow the operation from the front, the cinematic chain has to be moved by 90 degree. This is done using transmissions or gears inside the encapsulations.
The disadvantages of the movement of the cinematic chain inside the encapsulation are the following:
- A high number of components and a complicated mechanics increase the risk of a malfunction inside the gastight compartment, which is hard to fix.
- At a deforming of the encapsulation (caused e.g. by overpressure) the result can be a displacement of components of the mechanics, which can result in a blocking.
- The assembly inside the encapsulation is more complicated then outside, due to limited space and access.
- The space requirement close to high voltage components can cause dielectric problems.

Such a three-phase gasinsulated medium voltage switching device is disclosed in the EP 0 633 587 A1 with a disconnecting device between medium voltage levels and voltage transformers with disconnector contacts which are arranged on a rotatable shaft, in that way, that by a partly rotation of the shaft, the disconnector contacts switch connected voltage transformers between medium voltage level and ground level, wherein the shaft is passing through the side wall of a gastight compartment and/or a housing.

XP055026780 discloses a disconnector with an operating pad outside a gas-tight enclosure but still inside the switchgear panel.

So it is an object of the invention, to overcome these disadvantages in a very efficient way.

According to the invention, a gasinsulated medium voltage switching device having a special construction for the rotatable shaft, which is passing through the side wall of a gastight compartment and/or a housing. Important is that the shaft is passing trough the side wall. By this it is possible to arrange further mechanical operation means perpendicular to the outer side wall area, so that it can be arranged between the compartments or panels which are arranged side by side. As the bushing of the contacts for the voltage transformer in three phase insulated medium voltage switching device are very often located side-by-side, the axis of the shaft operating the contacts is parallel to the front of the housing, which is called panel front.

This inventive construction allows the operation from the front of the panel in that way, that the cinematic chain of the manual operating means can be moved by 90 degree, in a very simple and effective way.

Further gears or complicated transmissions are obsolete by this inventive construction.

The hand driven actuating elements for mechanical operation of the rotation of the shaft are arranged along the outer side wall of the compartment from the backside to the front of the switching device.

According to this, an advantageous result is, that in case of an arrangement of several compartments beside, the actuating elements are arranged between the compartments. This is a very compact solution.

To realize, that the housings (panels) can be arranged very dense side by side, the hand driven actuating elements are constructed out of metal sheet material, in order to be flat enough, that they can be arranged between the compartments.

For this, the actuating elements have a lever, which is mechanically coupled between the shaft and the hand driven actuating element in form of a flat rod. So only a space of some millimetres is necessary, to arrange this rod between the panels.

Furthermore the rotatable shaft is made of insulating material. This important, to have insulation between several contact arranged on the shaft in electrical three phase use.

By this, the insulating material can be plastic or fiber reinforced material. It is important to have mechanical stiff shaft as well as a good insulation.

Furthermore the three contact elements, which are arranged on the rotation shaft, are contacted to voltage transformers by an electrical conductive elements. This conductive element has to be flexible enough, to compensate the partly rotation movement of the contact means.
Therefore, an advantageous embodiment of the invention is, that the conductive element is a spring made out of conductive material.

The foregoing and other aspects of the invention will become apparent following the detailed description of the invention when considered in conjunction with the enclosed drawing.

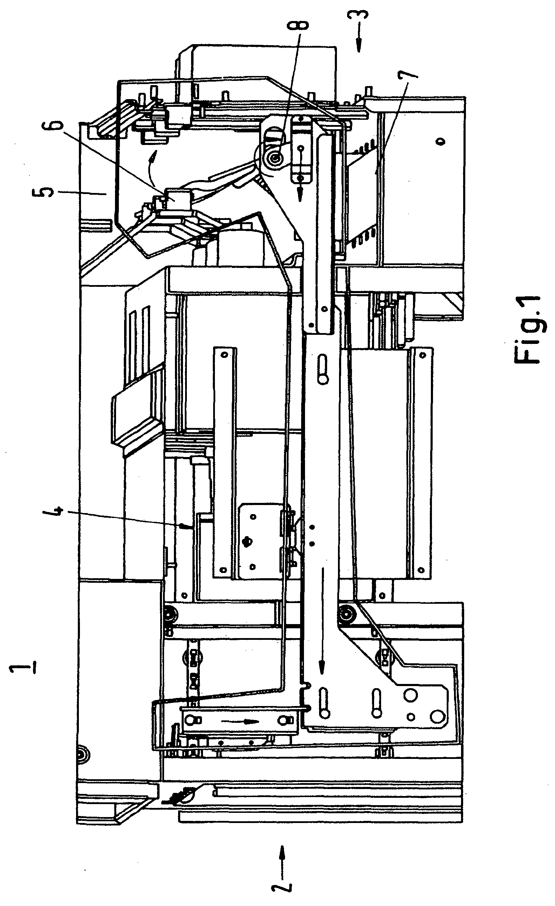

Figure 1: side view into a Gas insulated switchgear
Figure 1 shows a part of a switching device, which is named furthermore panel. The front side 2 is the operating interface for the operating personell. In this housing or panel 4 are gastight compartments with switching devices. A further gastight compartment 5 is arranged at the backside 3 of the panel 1. In this compartment is arranged the disconnector switch 6 between High- or medium voltage level and the ground level positioned voltage transformer.

For each phase is arranged one voltage transformer.

The disconnector switch 6 is driven for all three phases with one common rotatable shaft 8. Between the voltage transformer and the disconnector switches 6 is arranged a metal spring 11 for each of the three phases.

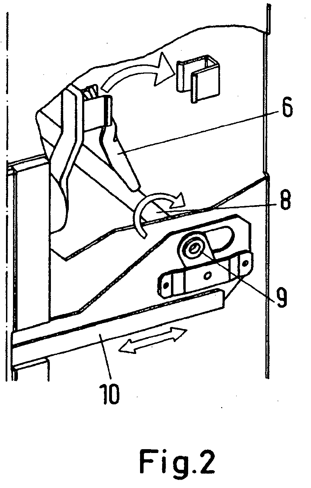

So the figure shows a detail of the gastight compartment 5 at the backside 3 of the panel. Figure 2 shows the compartment in an open view into, that means through the normally gastight closed wall of the compartment 5. In this compartment 5 are arranged the disconnector switches or contacts 6. These are arranged for all three phases on a rotatable shaft 8 which is made out of an insulating material. The shaft 8 extends through the gastight sidewall of this compartment. There are located mechanical means 9 in Form of a lever, which corresponds with a further hand driven actuating element 10 in form of a flat rod. This rod is arranged between two panels, which stand side by side. The rod is extended from the lever up to the front side 2 of the panel 1. The rod 10 is made of flat metal sheet material, in order to be flat enough, to be arranged in that compact and effective way between the panels.

### Position numbers:

- 1: Three-phase insulated medium voltage switchgear
- 2: Front side of the housing (panel)
- 3: Back side of the housing (panel)
- 4: Compartment
- 5: Compartment
- 6: Disconnector elements or contacts
- 7: Voltage transformer
- 8: Rotatable shaft
- 9: lever
- 10: hand driven actuating element
- 11: conductive spring

## Claims

1. Three-phase gasinsulated medium voltage switchgears (1) in a side-by-side arrangement with a disconnecting device (6) between medium voltage levels and voltage transformers with disconnector contacts (6) which are arranged on a rotatable shaft (8), in a way, that by a partly rotation of the shaft (8), the disconnector contacts (6) switch connected voltage transformers (7) between medium voltage level and ground level, wherein the shaft (8) is passing through the side wall of a gastight compartment and/or a housing,
**characterized in that** the shaft (8) extends through the gastight sidewall of the switchgear (1), where are located mechanical means (9) in form of a lever which corresponds with a further hand driven actuating element (10) in form of a flat rod, (1) these actuating elements are arranged between the switchgears, that means between the switchgear panels, in a way, that the actuating elements (9,10) are arranged along the outer side wall of the switchgear (1) from the backside (3) to the front (2) of the switching device.

2. Three-phase gasinsulated medium voltage switching device according to claim 1,
**characterized in,**
**that** hand driven actuating elements (10) for mechanical operation of the rotation of the shaft (8) are arranged along the outer side wall of the switchgear (1) and from the backside (3) to the front (2) of the switching device.

3. Three-phase gasinsulated medium voltage switching device according to claim 1,
**characterized in, that** the hand driven actuating elements (10) are constructed out of metal sheet material, in order to be flat enough, that they can be arranged between the switchgear panels.

4. Three-phase gasinsulated medium voltage switching device according to claim 3,
**characterized in,**
**that** the actuating elements (9,10) have a lever (9), which is mechanically coupled between the shaft and the hand driven actuating element (10) in form of a flat rod.

5. Three-phase gasinsulated medium voltage switching device according to one of the aforesaid claims,
**characterized in,**
**that** the shaft (2) is made of insulating material.

6. Three-phase gasinsulated medium voltage switching device according to claim 5,
**characterized in,**
**characterized in that** the insulating material is fiber reinforced plastic.

7. Three-phase gasinsulated medium voltage switching device according to one of the aforesaid claims,
**characterized in,**
**that** the three contact elements, which are arranged on the rotation shaft (8), are contacted to the voltage transformers (7) by an electrical conductive element.

8. Three-phase gasinsulated medium voltage switching device, according to claim 7,
**characterized in,**
**that** the conductive element is extendable, like a spring, in order to compensate the rotation movement of the shaft (8).

9. Three-phase gasinsulated medium voltage switching device, according to one of the aforesaid claims,
**characterized in,**
**that** the voltage transformers (7) are arranged in a gastight compartment (5) of the switching device.

10. Three-phase gasinsulated medium voltage switching device, according to one of the aforesaid claims,
**characterized in,**
**that** the voltage transformers (7) are arranged outside of the gastight compartment (5), but connected with the same.

## Patentansprüche

1. Gasisolierte Dreiphasen-Mittelspannungs-Schalteinrichtung (1) in einer nebeneinanderliegenden Anordnung mit einer Trenneinrichtung (6) zwischen Mittelspannungspegeln und Spannungstransformatoren mit Trennkontakten (6), die auf einer drehbaren Welle (8) angeordnet sind, dergestalt, dass durch teilweise Drehung der Welle (8) die Trennkontakte (6) verbundene Spannungstransformatoren (7) zwischen dem Mittelspannungspegel und Erdpegel schalten, wobei die Welle (8) durch die Seitenwand eines gasdichten Fachs und/oder eines Gehäuses verläuft,
**dadurch gekennzeichnet, dass** sich die Welle (8) durch die gasdichte Seitenwand der Schalteinrichtung (1) erstreckt, wo sich mechanische Mittel (9) in Form eines Hebels befinden, der mit einem weiteren handgesteuerten Betätigungselement (10) in Form eines flachen Stabs korrespondiert, wobei diese Betätigungselemente zwischen den Schalteinrichtungen angeordnet sind, das heißt, zwischen den Schalteinrichtungstafeln, dergestalt, dass die Betätigungselemente (9, 10) entlang der äußeren Seitenwand der Schalteinrichtung (1) von der Hinterseite (3) zur Vorderseite (2) der Schaltvorrichtung angeordnet sind.

2. Gasisolierte Dreiphasen-Mittelspannungs-Schaltvorrichtung nach Anspruch 1,
**dadurch gekennzeichnet,**
**dass** die handgesteuerten Betätigungselemente (10) für mechanischen Betrieb der Drehung der Welle (8) entlang der äußeren Seitenwand der Schalteinrichtung (1) und von der Hinterseite (3) zur Vorderseite (2) der Schaltvorrichtung angeordnet sind.

3. Gasisolierte Dreiphasen-Mittelspannungs-Schaltvorrichtung nach Anspruch 1,
**dadurch gekennzeichnet, dass** die handgesteuerten Betätigungselemente (10) aus Metallblechmaterial konstruiert sind, um flach genug zu sein, damit sie zwischen den Schalteinrichtungstafeln angeordnet werden können.

4. Gasisolierte Dreiphasen-Mittelspannungs-Schaltvorrichtung nach Anspruch 3,
**dadurch gekennzeichnet,**
**dass** die Betätigungselemente (9, 10) einen Hebel (9) aufweisen, der mechanisch zwischen der Welle (8) und dem handgesteuerten Betätigungselement (10) in Form eines flachen Stabs gekoppelt ist.

5. Gasisolierte Dreiphasen-Mittelspannungs-Schaltvorrichtung nach einem der vorhergehenden Ansprüche,
**dadurch gekennzeichnet,**
**dass** die Welle (8) aus isolierendem Material besteht.

6. Gasisolierte Dreiphasen-Mittelspannungs-Schaltvorrichtung nach Anspruch 5,
**dadurch gekennzeichnet,**
**dadurch gekennzeichnet, dass** das isolierende Material faserverstärkter Kunststoff ist.

7. Gasisolierte Dreiphasen-Mittelspannungs-Schaltvorrichtung nach einem der vorhergehenden Ansprüche,
**dadurch gekennzeichnet,**
**dass** die drei Kontaktelemente, die auf der Drehwelle (8) angeordnet sind, durch ein elektrisch leitfähiges Element mit den Spannungstransformatoren (7) kontaktiert werden.

8. Gasisolierte Dreiphasen-Mittelspannungs-Schaltvorrichtung nach Anspruch 7,
**dadurch gekennzeichnet,**
**dass** das leitfähige Element wie eine Feder dehnbar ist, um die Drehbewegung der Welle (8) zu kompensieren.

9. Gasisolierte Dreiphasen-Mittelspannungs-Schaltvorrichtung nach einem der vorhergehenden Ansprüche,
**dadurch gekennzeichnet,**
**dass** die Spannungstransformatoren (7) in einem gasdichten Fach (5) der Schaltvorrichtung angeordnet sind.

10. Gasisolierte Dreiphasen-Mittelspannungs-Schaltvorrichtung nach einem der vorhergehenden Ansprüche,
**dadurch gekennzeichnet,**
**dass** die Spannungstransformatoren (7) außerhalb des gasdichten Fachs (5) angeordnet, aber mit diesem verbunden sind.

## Revendications

1. Appareillages de commutation moyenne tension triphasés isolés au gaz (1) dans une disposition côte à côte avec un dispositif de sectionnement (6) entre des niveaux de moyenne tension et des transformateurs de tension avec des contacts de sectionnement (6) qui sont disposés sur un arbre rotatif (8), de telle sorte que par une rotation partielle de l'arbre (8), les contacts de sectionnement (6) basculent les transformateurs de tension raccordés (7) entre le niveau de moyenne tension et le niveau de terre, l'arbre (8) passant à travers la paroi latérale d'un compartiment et/ou d'un boîtier étanches aux gaz,
**caractérisés en ce que** l'arbre (8) s'étend à travers la paroi latérale étanche aux gaz de l'appareillage de commutation (1), où sont positionnés des moyens mécaniques (9) sous la forme d'un levier qui correspond à un autre élément d'actionnement manuel (10) sous la forme d'une tige plate, ces éléments d'actionnement étant disposés entre les appareillages de commutation, c'est-à-dire entre les panneaux d'appareillage de commutation, de telle sorte que les éléments d'actionnement (9, 10) sont disposés le long de la paroi latérale extérieure de l'appareillage de commutation (1) de l'arrière (3) à l'avant (2) du dispositif de commutation.

2. Dispositif de commutation moyenne tension triphasé isolé aux gaz selon la revendication 1,
**caractérisé en ce que**
les éléments d'actionnement manuels (10) pour l'opération mécanique de la rotation de l'arbre (8) sont disposés le long de la paroi latérale extérieure de l'appareillage de commutation (1) et de l'arrière (3) à l'avant (2) du dispositif de commutation.

3. Dispositif de commutation moyenne tension triphasé isolé aux gaz selon la revendication 1,
**caractérisé en ce que**
les éléments d'actionnement manuels (10) sont construits dans un matériau métallique en feuille afin d'être suffisamment plats pour pouvoir être disposés entre les panneaux d'appareillage de commutation.

4. Dispositif de commutation moyenne tension triphasé isolé aux gaz selon la revendication 3,
**caractérisé en ce que**
les éléments d'actionnement (9, 10) comportent un levier (9), qui est couplé mécaniquement entre l'arbre (8) et l'élément d'actionnement manuel (10) sous la forme d'une tige plate.

5. Dispositif de commutation moyenne tension triphasé isolé aux gaz selon une des revendications précédentes,
**caractérisé en ce que**
l'arbre (8) est constitué d'un matériau isolant.

6. Dispositif de commutation moyenne tension triphasé isolé aux gaz selon la revendication 5,
**caractérisé en**
**caractérisé en ce que** le matériau isolant est du plastique renforcé de fibres.

7. Dispositif de commutation moyenne tension triphasé isolé aux gaz selon une des revendications précédentes,
**caractérisé en ce que**
les trois éléments de contact, qui sont disposés sur l'arbre de rotation (8), sont mis en contact avec les transformateurs de tension (7) par un élément électriquement conducteur.

8. Dispositif de commutation moyenne tension triphasé isolé aux gaz selon la revendication 7,
**caractérisé en ce que**
l'élément conducteur est extensible, comme un ressort, afin de compenser le mouvement de rotation de l'arbre (8).

9. Dispositif de commutation moyenne tension triphasé isolé aux gaz selon une des revendications précédentes,
**caractérisé en ce que**
les transformateurs de tension (7) sont disposés dans un compartiment étanche aux gaz (5) du dispositif de commutation.

10. Dispositif de commutation moyenne tension triphasé isolé aux gaz selon une des revendications précédentes,
**caractérisé en ce que**
les transformateurs de tension (7) sont disposés à l'extérieur du compartiment étanche aux gaz (5), mais raccordés à celui-ci.
